# EUROPÄISCHE PATENTANMELDUNG

(11) **EP 4 030 321 A1**
(43) Veröffentlichungstag der Anmeldung: **20.07.2022**
(21) Anmeldenummer: 21151516.8
(22) Anmeldetag: 14.01.2021
(51) Int. Cl.: G06F 21/33, G06F 21/44, H04L 9/32, H04L 29/06

(54) **AUTHENTIFIZIERUNG VON MINDESTENS EINEM ERSTEN GERÄT BEI MINDESTENS EINEM ZWEITEN GERÄT**

(71) Anmelder: Siemens Aktiengesellschaft, 80333 München (DE)
(72) Erfinder: Amrhein, Armin, 92245 Kümmersbruck (DE); Becker, Stefan, 91325 Adelsdorf (DE); Falk, Rainer, 85586 Poing (DE); Palmin, Anna, 76187 Karlsruhe (DE); Pfau, Axel, 80333 München (DE); Rauch, Martin, 86415 Mering (DE)

(57) **Zusammenfassung**

Die Erfindung gibt Verfahren zur Authentifizierung von mindestens einem ersten Gerät bei mindestens einem zweiten Gerät, aufweisend die folgenden Schritte, an:
- Empfangen (S1) von mindestens einem ersten Datenelement und mindestens einem zweiten Datenelement durch das mindestens eine zweite Gerät,
wobei das mindestens eine erste Datenelement auf mindestens ein erstes Zertifikat verweist, wobei das erste Zertifikat zum Zeitpunkt des Empfangens (S1) eine Gültigkeit, welche in der Vergangenheit liegt, aufweist,
wobei das mindestens eine zweite Datenelement auf das mindestens ein zweites Zertifikat verweist,
wobei das mindestens eine erste Zertifikat und das mindestens eine zweite Zertifikat dem mindestens einem ersten Gerät zugeordnet sind,
- Speichern (S2) des mindestens einen ersten Datenelements und/oder des mindestens einen zweiten Datenelements in einer Datenspeichereinheit, wobei die Datenspeichereinheit für das mindestens eine zweite Gerät zugreifbar ist und
- Authentifizieren (S3) des mindestens einen ersten Geräts durch das mindestens eine zweite Zertifikat durch das mindestens eine zweite Gerät.

Außerdem gibt die Erfindung ein zugehöriges Computerprogrammprodukt und computerlesbares Medium an.

## Beschreibung

### HINTERGRUND DER ERFINDUNG

### Gebiet der Erfindung

Die vorliegende Erfindung betrifft ein Verfahren zur Authentifizierung von mindestens einem ersten Gerät bei mindestens einem zweiten Gerät. Außerdem gibt die Erfindung ein zugehöriges Computerprogrammprodukt und computerlesbares Medium an.

### Beschreibung des Stands der Technik

Eine zunehmende Vernetzung und Anbindung von Automatisierungssystemen an öffentliche Netze bedingt, dass aus IT-Umgebungen (IT = Information Technology) bekannte Security Maßnahmen auch in OT-Umgebungen (OT = Operational Technology) Einzug halten. Unter OT ist Hardware und Software, die durch die direkte Überwachung und/oder Kontrolle von physikalischen Geräten, Prozessen und Ereignissen im Unternehmen eine Änderung erkennen oder verursachen, zu verstehen. Kennzeichnend für eine OT-Umgebung ist ein in sich geschlossenes System, das über keinen zentralen Punkt verfügt bzw. über keinen zentralen Punkt, welcher immer über alle für das geschlossene System relevanten Informationen verfügt. In einer IT-Umgebung hingegen existiert ein zentraler für alle Komponenten und/oder Kommunikationspartner erreichbarer Punkt.

Eine wesentliche Komponente bezüglich Sicherheit sind in IT-Umgebungen genauso wie in OT-Umgebungen digitale Zertifikate, mit denen sich die Kommunikationspartner, insbesondere Steuergeräte, IoT-Geräte und Speicherprogrammierbare Steuerung, gegenseitig authentifizieren können.

Dabei ist es wichtig zu wissen, ob das Zertifikat, das die Gegenstelle zur Authentisierung verwendet, gültig und vertrauenswürdig ist, oder ob das Zertifikat insbesondere auf Grund eines Sicherheitsvorfalls von der ausstellenden Instanz, insbesondere einer Certification Authority (CA), zurückgezogen wurde und somit nicht mehr vertrauenswürdig ist.

Eine Prüfung des Status eines Zertifikats ist ein obligatorischer Schritt im Rahmen der Zertifikatsvalidierung gemäß gängigen sicheren Kommunikationsverfahren, insbesondere TLS. Ferner kann es auch aus anderen Gründen interessant sein, zu wissen, wenn ein Zertifikat durch ein anderes ersetzt wurde und das bisherige, ersetzte Zertifikat deshalb nicht mehr in Verwendung sein sollte.

In einer IT-Umgebung werden Certificate Revocation Lists (CRL) oder Online Certificate Status Protocols (OCSP) verwendet, um den Status eines Zertifikates abzufragen. Dazu ist aber oft ein Internetzugang erforderlich, der in einer OT-Umgebung nicht immer vorhanden ist, da viele OT-Umgebungen "abgeschottet" sind.

CRLs müssen auf aktuellem Stand gehalten werden und deswegen periodisch von einem Verteilungspunkt z.B. Webserver heruntergeladen werden. Besteht kein direkter Zugriff auf CRLs, müssen diese vom Verteilungspunkt heruntergeladen werden und in das System als Datei eingebracht werden. Das bedeutet erheblichen Aufwand und birgt die Gefahr, dass die CRLs nicht immer aktuell sind.

Deshalb sind speziell in einem geschlossenen OT-System alternative Möglichkeiten zu Certificate Revocation Lists (CRL) oder Online Certificate Status Protocols (OCSP) nötig, um Information über aktuell gültige Zertifikate zu verteilen.

Die Aufgabe der Erfindung besteht darin, die Sicherheit in OT-Umgebungen zu verbessern.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zur Authentifizierung von mindestens einem ersten Gerät bei mindestens einem zweiten Gerät. Das Verfahren weist die folgenden Schritte auf:
- Empfangen von mindestens einem ersten Datenelement und mindestens einem zweiten Datenelement durch das mindestens eine zweite Gerät,
   wobei das mindestens eine erste Datenelement auf mindestens ein erstes Zertifikat verweist, wobei das erste Zertifikat zum Zeitpunkt des Empfangens eine Gültigkeit, welche in der Vergangenheit liegt, aufweist,
   wobei das mindestens eine zweite Datenelement auf das mindestens ein zweites Zertifikat verweist,
   wobei das mindestens eine erste Zertifikat und das mindestens eine zweite Zertifikat dem mindestens einem ersten Gerät zugeordnet sind,
- Speichern des mindestens einen ersten Datenelements und/oder des mindestens einen zweiten Datenelements in einer Datenspeichereinheit, wobei die Datenspeichereinheit für das mindestens eine zweite Gerät zugreifbar ist und
- Authentifizieren des mindestens einen ersten Geräts durch das mindestens eine zweite Zertifikat durch das mindestens eine zweite Gerät.

Ein Aspekt der Erfindung besteht darin, dass das zweite Gerät, insbesondere die Kommunikationsgegenstelle des ersten geräts, eine Black-List für nicht mehr zu verwendende erste Zertifikate oder eine White-List für aktuell verwendbare zweite Zertifikate aufbaut und anhand deren das erste Gerät authentifiziert. Die Black-List und die White-List werden durch das Speichern des mindestens einen ersten Datenelements und/oder des mindestens einen zweiten Datenelements in einer Datenspeichereinheit erstellt und aktualisiert.

Um das Problem der nicht Verfügbarkeit von Certificate Revocation Lists (CRL) und/oder Online Certificate Status Protocol (OCSP) in OT-Umgebungen abzuschwächen, kann die Information, welche Zertifikate, im Wortlaut der Erfindung die ersten Zertifikate, durch das aktuelle Zertifikat, im Wortlaut der Erfindung zweite Zertifikate, ersetzt werden, in das aktuelle Zertifikat kodiert werden.

Außerdem ist es möglich, ungültige oder nicht mehr benötigte Zertifikate aus einer White-List, auch als Zertifikats-Positivliste oder certificate whitelist bezeichenbar, automatisch zu löschen. Wird in einer White-List zu einem ersten Gerät kein Zertifikat gefunden, so wurde das zugehörige Zertifikat möglicherweise bereits gelöscht oder ist ungültig.

Diese Listen bieten dem zweiten Gerät die Möglichkeit zu erkennen, wenn ein Angreifer versucht ein kompromittiertes Zertifikat zu verwenden, wenn ansonsten keine Zertifikatsstatusinformationen zur Verfügung stehen.

Weiterhin ist es möglich, dass ein Teilnehmer, insbesondere ein erstes Gerät, über mehrere Zertifikate verfügt, die unterschiedliche Widerrufsinformationen enthalten, insbesondere jeweils nur eine Teilmenge der gesamten Widerrufsinformation. Der Teilnehmer kann eines der bis auf die Widerrufsinformation gleichwertigen Zertifikate zufällig auswählen, um die Widerrufsinformation probabilistisch zu verteilen.

Gründe, dass ein Zertifikat ein anderes ersetzt, können insbesondere sein, dass:
- der Gültigkeitszeitraum des Zertifikates bald endet und es rechtzeitig vorher ein neues ausgestellt wird,
- der Inhalt eines Zertifikates geändert werden muss,
- das Zertifikat für ein Austauschgerät ausgestellt wird und damit ein Zertifikat eines defekten Gerätes ersetzt,
- der private Schlüssel eines Gerätes kompromittiert wurde und ein neuer privater Schlüssel erzeugt und ein neues Zertifikat ausgestellt wurde.

Im Gegensatz zur Erfindung wird wie bereits beschrieben Status-Information bzgl. eines Zertifikats aktuell entweder über CRL oder OCSP verteilt. CRLs müssen aktuell gehalten werden und deswegen periodisch von einem zentralem Verteilungspunkt, insbesondere einem Webserver, heruntergeladen werden. Besteht kein direkter Zugriff auf CRLs, müssen diese vom Verteilungspunkt heruntergeladen werden und in das System als Datei eingebracht werden. Das bedeutet erheblichen Aufwand und birgt die Gefahr, dass die CRLs nicht immer aktuell sind. Die Überprüfung der Gültigkeit eines Zertifikats mittels OCSP ist in einem abgeschirmten System meist nicht möglich.

Die Erfindung bietet den Vorteil, dass die Information, welche Zertifikate durch das aktuelle Zertifikat ersetzt werden, in das aktuelle Zertifikat kodiert wird. Durch die Verteilung der Information über ersetzte ("alte") Zertifikate im neuen Zertifikat, kann die Information bzgl. des Status der ersetzten Zertifikate wesentlich einfacher und zuverlässiger verteilt werden. Das Risiko, dass die Information bzgl. des Status eines Zertifikats in dem Fall, wenn sie benötigt wird, insbesondere bei der Validierung dieses Zertifikats durch einen Kommunikationspartner, insbesondere ein Software-Tool, nicht verfügbar ist, wird erheblich reduziert. Somit wird Kommunikationsunterbrechungen und Gefährdungen des Normalbetriebs der industriellen Anlage, die durch die Nichtverfügbarkeit der Information bzgl. des Status eines Zertifikats verursacht werden könnten, vorgebeugt und zur höheren Anlagenverfügbarkeit beigetragen.

In einer Weiterbildung der Erfindung weist das mindestens eine erste Datenelement und/oder das mindestens eine zweite Datenelement
- eine Serienkennung und/oder
- einen Hash-Wert auf.

Das hat den Vorteil, dass die Seriennummer und/oder der Hash des alten Zertifikats, des ersten Zertifikats, im neuen Zertifikat, dem zweiten Zertifikat, mit dem Hinweis, dass das zu der Seriennummer und/oder der Hash zugehörige Zertifikat ungültig ist, inkludiert werden kann. Als Serienkennung kann insbesondere eine Seriennummer verwendet werden.

In einer weiteren Weiterbildung der Erfindung weist das mindestens eine erste Datenelement eine Gültigkeitsinformation auf, wobei die Gültigkeitsinformation eine Information zur Gültigkeit des mindestens einen ersten Zertifikats angibt. Das hat den Vorteil, dass als zusätzliche Information insbesondere das Ablaufdatum des ersetzten Zertifikats, des ersten Zertifikats, inkludiert werden kann. Somit kann die Black- und White-Liste entsprechend bereinigt werden, indem abgelaufene Zertifikate von den Listen gelöscht werden.

In einer weiteren Weiterbildung der Erfindung weist das erfindungsgemäße Verfahren einen weiteren Verfahrensschritt auf:
- Empfangen von mindestens einem dritten Datenelement durch das mindestens eine zweite Gerät,
wobei das mindestens eine dritte Datenelement auf mindestens ein drittes Zertifikat verweist,
wobei das mindestens eine dritte Zertifikat dem mindestens einem ersten Gerät und/oder mindestens einem drittem Gerät zugeordnet ist.

Das hat den Vorteil, dass in einem Zertifikat, dem dritten Zertifikat, nicht nur Verweise, insbesondere Seriennummern, der direkt zu ersetzenden Zertifikate inkludiert sein können, sondern alle Zertifikate, die im OT-System aktuell zurückgezogen sind. Dadurch würde sich die Größe der Zertifikate erheblich erhöhen. In industriellen Automatisierungssystemen mit einer bekannten und begrenzten Anzahl von Geräten und Nutzern kann dies aber dennoch von Vorteil sein. Die Angabe widerrufener Zertifikate anderer Teilnehmer, dritter Geräte, in einem Zertifikat hat den Vorteil, dass ein erstes Gerät mit seinem Zertifikat die Widerrufsinformation für andere Teilnehmer, dritte Geräte, verteilen kann und sich die Widerrufsinformation somit von allein verbreitet. Insbesondere kann eine Austauschkomponente die Widerrufsinformation für diejenige Komponente verteilen, die sie ersetzt (Vorteil einer Black-List).

In einer weiteren Weiterbildung der Erfindung wird ein Status des mindestens einen ersten Zertifikats und/oder des mindestens einen zweiten Zertifikats mittels zumindest:
- einer Certificate Revocation List (CRL) und/oder
- eines Online Certificate Status Protocols (OCSP) bestimmt.

Das hat den Vorteil, dass die beschriebene Lösung alternativ oder zusätzlich zu einem bekannten Zertifikatswiderruf (CRL, OCSP) verwendet werden kann. Dazu kann ein zusätzlich vorhandener Internetzugang verwendet werden.

In einer weiteren Weiterbildung der Erfindung wurden das mindestens eine erste Zertifikat und das mindestens eine zweite Zertifikat dem mindestens einem ersten Gerät randomisiert zugeordnet. Das hat den Vorteil, dass die Zuteilung der Zertifikate von außen schwerer ersichtlich und angreifbar ist.

Weiterhin ist es möglich, dass ein Teilnehmer über mehrere Zertifikate verfügt, die unterschiedliche Widerrufsinformationen enthalten (z.B. jeweils nur eine Teilmenge der gesamten Widerrufsinformation). Der Teilnehmer kann eines der (bis auf die Widerrufsinformation gleichwertigen) Zertifikate zufällig auswählen, um die Widerrufsinformation probabilistisch zu verteilen.

In einer weiteren Weiterbildung der Erfindung weist das erfindungsgemäße Verfahren einen weiteren Verfahrensschritt auf:
- Erstellen eines vierten Datenelements, wobei das vierte Datenelement auf das mindestens eine zweite Gerät verweist, wobei das vierte Datenelement für das mindestens eine erste Gerät abrufbar ist.

Das hat den Vorteil, dass das erste Gerät durch das vierte Datenelement eine Information speichern kann, welchen anderen Teilnehmern, welchen zweiten Geräten, er schon welche Widerrufsinformation bereitgestellt hat und davon abhängig eine andere Widerrufsinformation über sein ausgewähltes Zertifikat bereitstellen und/oder ein herkömmliches Zertifikat auswählen, das keine Widerrufsinformation enthält und dadurch kompakter ist. So kann speziell eine leistungsfähige Komponente, insbesondere ein IoT-Edge-Gateway, in einem Automatisierungssystem unterschiedliche Zertifikate gegenüber insbesondere Steuergeräten/IoT-Geräten im verbundenen Automatisierungsnetzwerk verwenden, um somit die Widerrufsinformation im Automatisierungsnetzwerk zu verteilen. Es existiert durch die leistungsfähige Komponente somit eine zentrale Komponente, welche für eine erste Gruppe an zweiten Geräten andere Zertifikate verwendet wie für eine zweite Gruppe an zweiten Geräten.

In einer weiteren Weiterbildung der Erfindung ist oder umfasst das mindestens eine erste Gerät und/oder das mindestens eine zweite Gerät:
- mindestens ein Steuergerät und/oder
- mindestens ein Gerät einer Internet-of-Things-Umgebung und/oder
- mindestens eine speicherprogrammierbare Steuerung.

In einer weiteren Weiterbildung der Erfindung bilden das mindestens eine erste Gerät und das mindestens eine zweite Gerät mindestens einen Teil eines Operational Technology (OT) System.

Unter OT ist im Sinne der Erfindung Hardware und Software, die durch die direkte Überwachung und/oder Kontrolle von physikalischen Geräten, Prozessen und Ereignissen im Unternehmen eine Änderung erkennen oder verursachen, zu verstehen. Kennzeichnend für eine OT-Umgebung ist ein in sich geschlossenes System, das über keinen zentralen Punkt verfügt bzw. über keinen zentralen Punkt, welcher immer über alle für das geschlossene System relevanten Informationen verfügt. In einer IT-Umgebung hingegen existiert ein zentraler für alle Komponenten und/oder Kommunikationspartner erreichbarer Punkt.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnung ersichtlich.

Es zeigt:

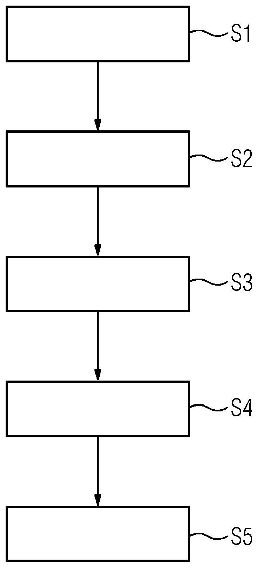

Fig. 1 ein Ablaufdiagramm des erfindungsgemäßen Verfahrens.

### DETAILLIERTE BESCHREIBUNG DER ERFINDUNG

- Fig. 1: zeigt ein Ablaufdiagramm des Verfahrens zur Authentifizierung von mindestens einem ersten Gerät bei mindestens einem zweiten Gerät.

Das Verfahren weist die folgenden Schritte auf:
Schritt S1: Empfangen von mindestens einem ersten Datenelement und mindestens einem zweiten Datenelement durch das mindestens eine zweite Gerät.

Das mindestens eine erste Datenelement verweist hierbei auf mindestens ein erstes Zertifikat. Das mindestens erste Zertifikat ist ein ursprüngliches Zertifikat, welches von dem ersten Gerät zur Authentifizierung verwendet wurde. Das erste Zertifikat ist nicht mehr gültig und soll durch ein neues Zertifikat (zweites Zertifikat) ersetzt werden. Das erste Zertifikat weist somit zum Zeitpunkt des Empfangens (Schritt S1) eine Gültigkeit, welche in der Vergangenheit liegt, auf.

Das mindestens eine zweite Datenelement verweist auf das mindestens ein zweites Zertifikat. Das zweite Zertifikat soll das erste Zertifikat ersetzen und in Zukunft zur Authentifizierung des ersten Gerätes verwendet werden.

Beide Zertifikate, das mindestens eine erste Zertifikat und das mindestens eine zweite Zertifikat, sind dem mindestens einem ersten Gerät zugeordnet.

Schritt S2: Speichern des mindestens einen ersten Datenelements und/oder des mindestens einen zweiten Datenelements in einer Datenspeichereinheit.

Die Datenspeichereinheit ist für das mindestens eine zweite Gerät zugreifbar. Das zweite Gerät kann somit auf das erste Datenelement und/oder das zweite Datenelement und damit auf das erste Zertifikat und/oder das zweite Zertifikat zugreifen. Die Datenspeichereinheit kann ebenso Teil des zweiten Geräts sein.

Wird das erste Datenelement und somit ein Verweis auf das erste Zertifikat in der Datenspeichereinheit gespeichert, so kann vom zweiten Gerät eine Black-List angelegt und verwendet werden. Die Black-List enthält Informationen zu Zertifikaten, welche nicht mehr verwendet werden sollen, insbesondere weil sie nicht mehr gültig und/oder abgelaufen sind.

Wird das zweite Datenelement und somit ein Verweis auf das zweite Zertifikat in der Datenspeichereinheit gespeichert, so kann vom zweiten Gerät eine White-List angelegt und verwendet werden. Die White-List enthält Informationen zu Zertifikaten, welche verwendet werden können, insbesondere Zertifikate, die aktuell gültig sind und zur Authentifizierung des ersten Geräts verwendet werden können.

Schritt S3: Authentifizieren des mindestens einen ersten Geräts durch das mindestens eine zweite Zertifikat durch das mindestens eine zweite Gerät. Das zweite Gerät prüft das zweite Zertifikat, und das erste Gerät wird durch das zweite Gerät authentifiziert.

Optional weist das Verfahren den weiteren Verfahrensschritt auf:
Schritt S4: Empfangen von mindestens einem dritten Datenelement durch das mindestens eine zweite Gerät.

Das mindestens eine dritte Datenelement verweist auf mindestens ein drittes Zertifikat. Das mindestens eine dritte Zertifikat ist dem mindestens einem ersten Gerät und/oder mindestens einem drittem Gerät zugeordnet. So kann vom ersten Gerät an das zweite Gerät auch ein Verweis auf Zertifikate, welche zur Authentifizierung weiterer, insbesondere dritter Geräte, verwendet werden können, verteilt werden.

Optional weist das Verfahren den weiteren Verfahrensschritt auf:
Schritt S5: Erstellen eines vierten Datenelements.

Das vierte Datenelement verweist auf das mindestens eine zweite Gerät. Das vierte Datenelement ist für das mindestens eine erste Gerät abrufbar. Das hat den Vorteil, dass das erste Gerät durch das vierte Datenelement eine Information speichern kann, welchen anderen Teilnehmern, welchen zweiten Geräten, er schon welche Widerrufsinformation bereitgestellt hat und davon abhängig eine andere Widerrufsinformation über sein ausgewähltes Zertifikat bereitstellen und/oder ein herkömmliches Zertifikat auswählen, das keine Widerrufsinformation enthält und dadurch kompakter ist.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- S1 - S5: Verfahrensschritte 1 bis 5

## Patentansprüche

1. Verfahren zur Authentifizierung von mindestens einem ersten Gerät bei mindestens einem zweiten Gerät,
aufweisend die Schritte:
- Empfangen (S1) von mindestens einem ersten Datenelement und mindestens einem zweiten Datenelement durch das mindestens eine zweite Gerät,
wobei das mindestens eine erste Datenelement auf mindestens ein erstes Zertifikat verweist, wobei das erste Zertifikat zum Zeitpunkt des Empfangens (S1) eine Gültigkeit, welche in der Vergangenheit liegt, aufweist,
wobei das mindestens eine zweite Datenelement auf das mindestens ein zweites Zertifikat verweist,
wobei das mindestens eine erste Zertifikat und das mindestens eine zweite Zertifikat dem mindestens einem ersten Gerät zugeordnet sind,
- Speichern (S2) des mindestens einen ersten Datenelements und/oder des mindestens einen zweiten Datenelements in einer Datenspeichereinheit, wobei die Datenspeichereinheit für das mindestens eine zweite Gerät zugreifbar ist und
- Authentifizieren (S3) des mindestens einen ersten Geräts durch das mindestens eine zweite Zertifikat durch das mindestens eine zweite Gerät.

2. Verfahren nach Anspruch 1,
wobei das mindestens eine erste Datenelement und/oder das mindestens eine zweite Datenelement:
- eine Serienkennung und/oder
- einen Hash-Wert
aufweist.

3. Verfahren nach einem der vorhergehenden Ansprüche,
mit dem weiteren Verfahrensschritt:
wobei das mindestens eine erste Datenelement eine Gültigkeitsinformation aufweist,
wobei die Gültigkeitsinformation eine Information zur Gültigkeit des mindestens einen ersten Zertifikats angibt.

4. Verfahren nach einem der vorhergehenden Ansprüche,
mit dem weiteren Verfahrensschritt:
- Empfangen (S4) von mindestens einem dritten Datenelement durch das mindestens eine zweite Gerät,
wobei das mindestens eine dritte Datenelement auf mindestens ein drittes Zertifikat verweist,
wobei das mindestens eine dritte Zertifikat dem mindestens einem ersten Gerät und/oder mindestens einem drittem Gerät zugeordnet ist.

5. Verfahren nach einem der vorhergehenden Ansprüche,
wobei ein Status des mindestens einem ersten Zertifikats und/oder des mindestens einem zweiten Zertifikats mittels zumindest:
- einer Certificate Revocation List (CRL) und/oder
- eines Online Certificate Status Protocols (OCSP) bestimmt wird.

6. Verfahren nach einem der vorhergehenden Ansprüche,
wobei das mindestens eine erste Zertifikat und das mindestens eine zweite Zertifikat dem mindestens einem ersten Gerät randomisiert zugeordnet wurden.

7. Verfahren nach einem der vorhergehenden Ansprüche,
mit dem weiteren Verfahrensschritt:
- Erstellen (S5) eines vierten Datenelements, wobei das vierte Datenelement auf das mindestens eine zweite Gerät verweist,
wobei das vierte Datenelement für das mindestens eine erste Gerät abrufbar ist.

8. Verfahren nach einem der vorhergehenden Ansprüche,
wobei das mindestens eine erste Gerät und/oder das mindestens eine zweite Gerät:
- mindestens ein Steuergerät und/oder
- mindestens ein Gerät einer Internet-of-Things-Umgebung und/oder
- mindestens eine speicherprogrammierbare Steuerung ist oder umfasst.

9. Verfahren nach einem der vorhergehenden Ansprüche,
wobei das mindestens eine erste Gerät und das mindestens eine zweite Gerät mindestens einen Teil eines Operational Technology (OT) System bilden.

10. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 9 ausgeführt werden, wenn das Computerprogramm auf der Recheneinheit ausgeführt wird.

11. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 9 ausgeführt werden, wenn das Computerprogramm auf der Recheneinheit ausgeführt wird.
